Europäisches Patentamt

**European Patent Office**

**Office européen des brevets**

(11) Numéro de publication: **0 471 909 A1**

## DEMANDE DE BREVET EUROPEEN

(21) Numéro de dépôt: **90402332.2**

(22) Date de dépôt: **22.08.90**

(51) Int. Cl.⁵: **A47F 7/28**, A47F 5/00, G11B 23/023

(43) Date de publication de la demande:
**26.02.92 Bulletin 92/09**

(84) Etats contractants désignés:
**AT BE CH DE DK ES GB GR IT LI LU NL SE**

(71) Demandeur: **FAPEC**
**7, rue de la Croix Vigneron**
**F-95160 Montmorency(FR)**

(72) Inventeur: **Heimendinger, Bernard**
**11 bis, rue Le Laboureur**
**F-95160 Montmorency(FR)**

(74) Mandataire: **Hud, Robert**
**Cabinet COLLIGNON 6, rue de Madrid**
**F-75008 Paris(FR)**

(54) **Dispositif de présentation pour cassettes audio, cassettes vidéo, disques compacts et articles similaires.**

(57) Le dispositif comprend un plateau de présentation 1 dont les bords longitudinaux présentent chacun une succession de logements 2 en regard. Deux logements 2 opposés reçoivent les extrémités d'un profilé 5, 14 en forme de glissière dans lequel sont enfilées en succession des plaquettes portant chacune un plot 9, 17 à section en forme de parallélogramme. Les articles à présenter sont disposés en rangées, chacun entre deux plots successifs du profilé 5, 14, et chaque article peut prendre une position de présentation inclinée vers l'arrière et une position d'effacement inclinée vers l'avant. En modifiant l'écartement entre les profilés 5, 14 et la disposition des plots le long d'un tel profilé, on peut à volonté faire alterner sur le plateau 1 des rangées d'articles de formats différents et donc de natures différentes.

L'invention concerne l'exposition en rangées alternées de cassettes audio, de cassettes vidéo, de disques compacts et d'articles similaires.

Fig.1

L'invention concerne un dispositif de présentation pour des articles de reproduction du son et/ou de l'image, tels que des disques compacts, des cassettes audio ou des cassettes vidéo par exemple. L'invention concerne plus particulièrement de tels dispositifs de présentation destinés à équiper des magasins ou autres lieux d'expositon où la présentation des articles s'effectue en linéaire.

Pour une présentation efficace et plaisante des articles du genre des cassettes audio, cassettes vidéo, disques compacts, etc .., on prévoit de disposer les articles d'une même catégorie, et donc d 'un même format, selon des rangées à l'intérieur desquelles chaque article se trouve légèrement incliné vers l'arrière. Ainsi la face avant du premier article est facilement lisible par l'utilisateur, mais il n'en est pas de même pour les articles suivants de la rangée dont les faces avant respectives sont cachées par les articles situés devant eux dans cette rangée. Pour prendre connaissance des indications portées par la face avant d'un de ces articles, l'utilisateur se voit alors contraint de le sortir de son logement ce qui présente de nombreux inconvénients tant au niveau des risques de vol que des risques de replacement erroné de l'article après lecture.

Pour remédier à cet inconvénient on a proposé des présentoirs dont le fond est constitué par l'empreinte d'une succession de rangées identiques conçues pour recevoir des articles de même format dans une position d'exposition inclinée vers l'arrière, avec des moyens de blocage permettant d'immobiliser chaque article dans une position inclinée vers l'avant dans laquelle celui-ci dégage l'accès visuel aux indications portées par l'article disposé juste derrière.

Ces dispositifs connus présentent toutefois l'inconvénient majeur de ne permettre d'exposer, en des rangées successives sur de grandes surfaces d'exposition, que des articles de même format et donc de même type, c est-à-dire uniquement des cassettes audio, ou uniquement des disques compacts, etc .... Outre la monotonie d'une telle présentation, celle-ci ne permet pas en particulier de réaliser des expositions par thèmes en disposant côte à côte le choix des divers enregistrements disponibles, sur différents supports, d'un même artiste ou d'une même oeuvre.

La présente invention a pour objet de remédier à cet inconvénient. Elle propose à cet effet un présentoir de fabrication et d'utilisation simples, pouvant être utilisé pour des expositions en linéaire de longueurs variables, qui permet non seulement l'exposition en rangées successives de supports d'enregistrements sonores ou visuels de divers formats en assurant une bonne visibilité des indications de la face avant de tous les articles d'une même rangée, mais aussi d'introduire à volonté, dans ces rangées successives, de tels supports d'enregistrement présentant entre eux d'importantes différences de format, comme c'est le cas en particulier pour les cassettes audio et les cassettes vidéo par exemple.

A cet effet, selon l'invention, le dispositif comprend un plateau de présentation muni d'organes permettant son maintien dans une position horizontale ou faiblement inclinée, avec sur deux côtés opposés parallèles une succession d'organes de fixation disposés en regard les uns des autres. Des profilés de support, dont les extrémités sont destinées à coopérer avec des organes de fixation en regard des deux côtés du plateau afin d'assurer leur maintien, sont fixés de manière amovible sur le plateau parallèlement les uns aux autres et à des écartements variables à volonté. Chaque profilé reçoit, montées en succession sur au moins l'une de ses faces latérales, des plaquettes supportant chacune un plot faisant saillie vers l'intérieur, lesdits plots étant à un écartement constant les uns des autres le long du profilé, et chaque plot présentant en section au moins quatre faces inclinées, parallèles deux à deux, deux faces disposées vers l'arrière étant destinées à engager la face avant d'un article en assurant respectivement le maintien stable de celui-ci dans une position de présentation inclinée vers l'arrière et dans une position d'effacement inclinée vers l'avant, alors que deux autres faces disposées vers l'avant sont destinées à engager la face arrière de l'article disposé juste avant dans la rangée pour assurer respectivement le maintien de cet article dans les deux mêmes positions d'exposition et d'effacement.

On comprend ainsi que, les articles exposés dans chaque rangée étant dans leur position d'exposition inclinée vers l'arrière, on peut accéder visuellement aux inscriptions portées par la face avant de l'un quelconque de ces articles en faisant pivoter vers l'avant, en position d'effacement, tous les articles situés devant dans cette rangée. On comprend aussi que, en munissant les profilés successifs fixés le long du plateau d'exposition de plots appropriés et en réglant de façon convenable l'écartement de ces profilés, on peut se faire succéder de toutes façons désirées, le long du plateau d'exposition, des rangées d'articles de nature et de format différents, en mélangeant par exemple les rangées de cassettes audio, de cassettes vidéo, de disques compacts ou autres articles.

Avantageusement, selon l'invention, les éléments de fixation portés par les côtés opposés du plateau sont constitués par une succession de logements identiques régulièrement espacés, par exemple en forme de crémaillère. Chaque profilé de support présente des extrémités aplaties pour s'engager dans des encoches opposées, et une partie intermédiaire présentant sur au moins l'une de ses faces longitudinales une forme de glissière dans laquelle peuvent s'enfiler par coulissement les plaquettes successives portant les plots. Pour le maintien d'articles d'épaisseur importante, telles que les cassettes vidéo par exemple, il est nécessaire que les plots soient à une certaine hauteur sur les plaquettes qui les portent et, pour cela, ces plaquettes présentent alors un profil particulier avec une partie en T dont les ailes s'engagent dans la glissière du profilé et qui se prolonge vers l'intérieur par une partie, parallèle aux dites ailes, dont la hauteur dépasse celle du profilé et de la partie supérieure de laquelle fait saillie le plot.

Lorsque, dans sa position d'exposition, le plateau est disposé à l'horizontale, les plots utilisés peuvent avantageusement présenter en section une forme de losange, avec des faces supérieures avant et arrière présentant une inclinaison de 30° de part et d'autre de la verticale.

Lorsque, dans sa position d'exposition, le plateau est destiné à présenter une inclinaison modérée vers le bas (par exemple de l'ordre de 30° par rapport à l'horizontale), Tes plots utilisés ont alors avantageusement en section une forme de parallélogramme, les faces supérieures avant et arrière de celui-ci faisant respectivement, avec la verticale au plan du plateau, des angles d'environ 40° vers l'arrière et 20° vers l'avant.

Pour bien faire comprendre le dispositif selon l'invention on en décrira ci-après, à titre d'exemples sans caractère limitatif, une forme d'exécution préférée et une variante en référence au dessin schématique annexé dans lequel :

la figure 1 est une vue en plan d'un dispositif de présentation selon l'invention, à orientation horizontale ;

la figure 2 est, à plus grande échelle, une vue de côté du dispositif de la figure 1 ;

la figure 3 est une vue perspective partielle montrant le maintien d'une cassette audio au moyen d'un profilé du dispositif de la figure 1 ;

la figure 4 est une vue partielle en perspective montrant la forme en glissière d'un profilé de support ;

la figure 5 est une vue partielle en perspective montrant le maintien d'une cassette vidéo au moyen d'un autre profilé de support du dispositif de la figure 1 ;

la figure 6 est une vue perspective d'une plaquette porte-plot pour le maintien d'une cassette vidéo ;

la figure 7 représente, en élévation, à titre de variante, un profilé de support utilisé avec un plateau de présentation incliné par rapport à l'horizontale ; et

la figure 8 est une vue perspective du profilé de la figure 7.

En référence au dessin, on a représenté en 1 un plateau de présentation réalisé en métal et comportant un fond plat de forme rectangulaire. Chaque bord longitudinal du plateau 1 comporte, sur toute sa longueur, une succession de logements 2 identiques régulièrement espacés qui sont disposés exactement en regard des logements 2 portés par le bord opposé. A son extrémité arrière, le plateau 1 présente, sur la plus grande partie de sa longueur, un élément 3 à profil en L destiné à s'engager dans une rainure longitudinale d'un support (non représenté au dessin), par exemple d'un panneau lamellaire, pour permettre son maintien en position suspendue horizontale.

Dans deux logements 2 en regard du plateau 1 viennent s'engager les extrémités aplaties 4 d'un profilé métallique de support 5 qui a été représenté plus en détail à la figure 4. Le profilé 5, obtenu par filière, présente sur la plus grande partie de sa longueur un profil de glissière double avec, de chaque côté d'une âme centrale verticale, des retours verticaux de guidage supérieur 6 et inférieur 7.

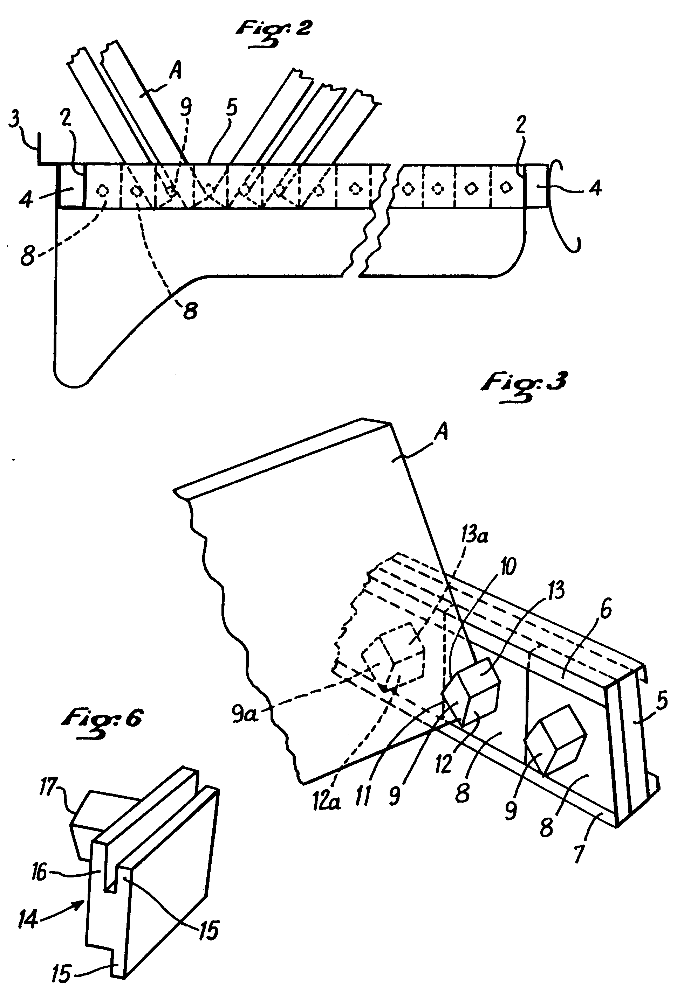

Comme repésenté à la figure 3 on introduit dans la glissière constituée par un côté du profilé 5, sur toute la longueur de celle-ci, une succession de plaquettes 8 identiques obtenues par injection de matière plastique, chaque plaquette 8 étant de forme rectangulaire et portant sur un côté un plot saillant 9 qui présente en section la forme d'un parallélogramme. Les plots représentés à la figure 3, présentant en section la forme d'un losange, sont du type conçu pour le maintien de cassettes audio, et l'écartement entre deux plots consécutifs est donc prévu légèrement supérieur à l'épaisseur d'une telle cassette. La face arrière supérieure 10 de chaque plot 9 présente une inclinaison de 30° vers l'avant par rapport à la verticale, alors que la face arrière inférieure 11 de ce plot fait un angle de 30° vers l'arrière par rapport à la verticale. Les faces avant inférieure 12 et supérieure 13 sont respectivement parallèles aux faces 10 et 11. Comme on le voit sur la figure 3, lorsque le bord latéral d'une cassette audio A est inséré entre le plot 9 et le plot suivant 9a, celle-ci peut être maintenue dans deux positions inclinées stables. Dans une première position représentée à la figure 3, la partie inférieure de la face avant de la cassette A engage la face arrière 11 du plot 9, alors que la face arrière de la cassette engage la face supérieure avant 13a (parallèle à la face 11) du plot 9a. La cassette A se trouve donc dans une position inclinée vers l'arrière de 30° par rapport à la verticale, position particulièrement favorable pour une lecture facile par l'utilisateur des indications portées par sa face avant.

Dans une seconde position, obtenue par pivotement vers l'avant de la cassette A, la face avant de celle-ci vient en appui contre la face arrière supérieure 10 du plot 9, alors que la partie inférieure de la face arrière de la cassette vient engager la face inférieure avant 12a (parallèle à la face 10) du plot 9a. La cassette A présente alors une orientation de 30° de l'autre côté de la verticale, en ayant ainsi subi un pivotement vers l'avant de 60°. On comprend que dans cette position inclinée vers l'avant, la cassette A s'écarte d'une façon telle, de la cassette qui la suit juste, qu'elle autorise la lecture facile par l'utilisateur des indications portées par la face avant de la dite cassette suivante.

On comprend bien sûr que, pour le maintien effectif desdites cassettes, celles-ci coopèrent de chaque côté avec des systèmes de plots identiques montés sur les faces en regard de deux profilés 5 écartés l'un de l'autre d'une distance légèrement supérieure à la largeur des cassettes.

Dans les parties en forme de glissières d'autres profilés 5 peuvent également être montées d'autre plaquettes portant des plots conçus pour le maintien d'autres articles, par exemple pour le maintien des disques compacts et des cassettes vidéo.

Pour le maintien des disques compacts, la forme des plots utilisés est exactement la même que pour les cassettes audio. Comme les disques compacts sont toutefois d'une épaisseur un peu inférieure, on comprend que la dimension des supports des plots est alors légèrement inférieure pour réduire leur écartement, de plus les plots sont à une hauteur légèrement inférieure.

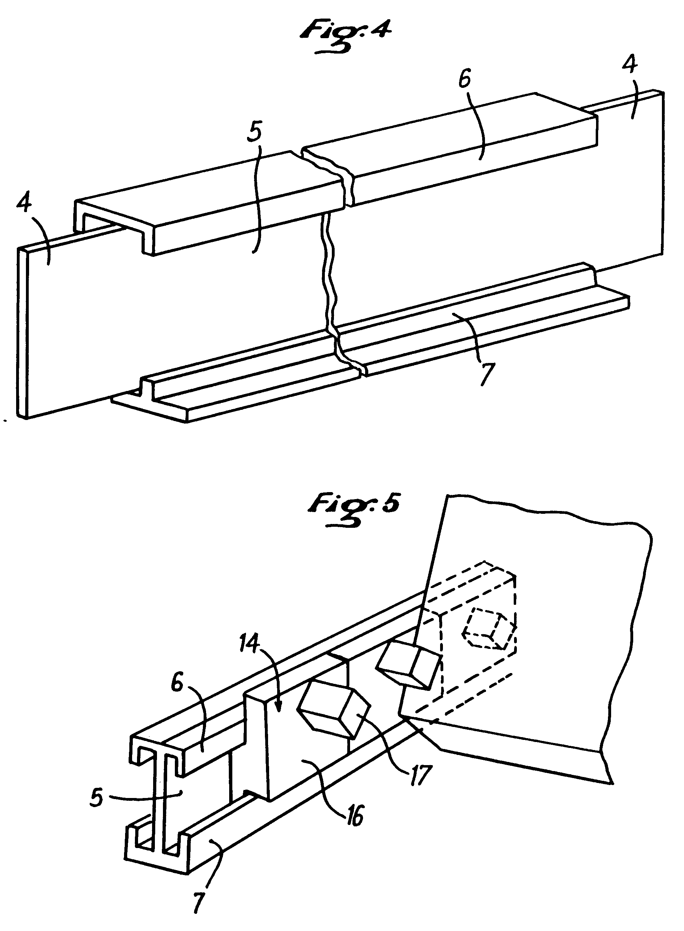

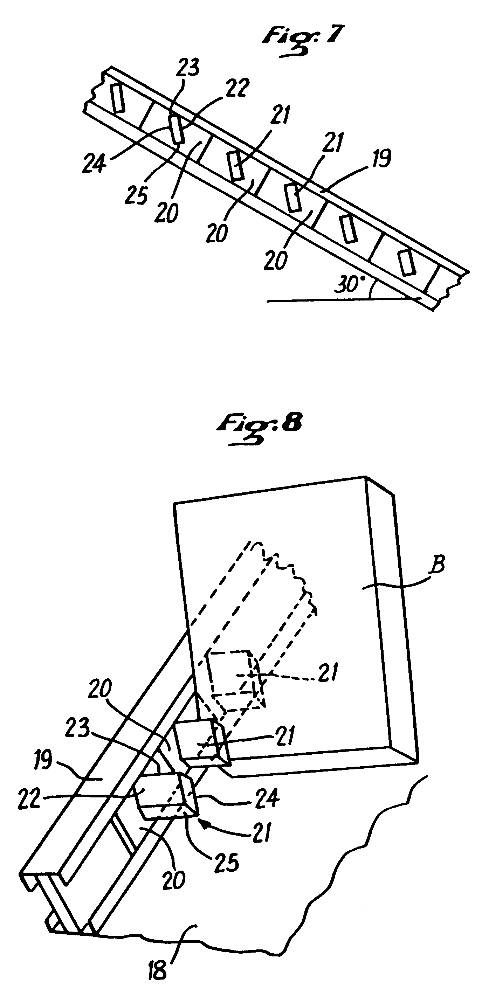

Pour le maintien des cassettes vidéo, qui présentent une épaisseur importante, les plots doivent être disposés nettement plus haut sur les plaquettes de support c'est-à-dire à une hauteur supérieure au bord inférieur de la face avant de la cassette dans la position de présentation inclinée vers l'arrière de celle-ci , et de même à une hauteur supérieure au bord inférieur de la face arrière de la cassette dans la position d'effacement inclinée vers l'avant de celle-ci. A cet effet, comme représenté aux figures 5 et 6, chaque plaquette 14 porte-plot présente une partie en T dont les ailes 15 sont destinées à s'engager dans la glissière formée par l'une des faces du profilé 5 alors que la partie centrale dirigée vers l'intérieur se prolonge, parallèlement à l'aile 15 supérieure, par une partie 16 d'un hauteur plus grande que celle de cette aile 15. Le plot 17, porté par la partie 16, se trouve ainsi à une hauteur nettement supérieure à celle des plots 9 de la figure 3 et la longueur des plaquettes 14 portant ces plots est calculée de façon que l'écartement entre deux plots 17 successifs soit suffisant pour permettre l'insertion d'une cassette vidéo. La forme des plots 17 (en losange) est identique à celle des plots 9, pour permettre le pivotement de la cassette vidéo d'une position d'exposition inclinée vers l'arrière de 30° à une position d'effacement inclinée vers l'avant de 30°.

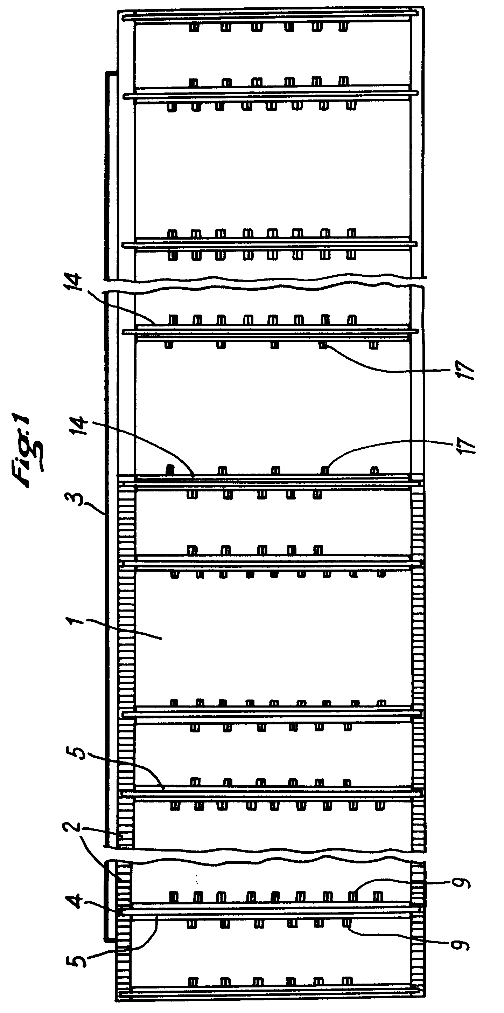

On comprend que, les plaquettes portant les plots de maintien des différents articles à exposer (cassettes audio, cassettes vidéo, disques compacts, ...) s'engageant toutes sur un type unique de profilés 5, on peut donc réaliser toute disposition désirée sur le plateau 1 du présentoir en alternant à volonté les rangées des différents types d'articles. Ainsi, on a représenté sur la figure 1, à titre d'exemple, une disposition comprenant successivement, de gauche à droite en regardant cette figure, une rangée de présentation de cassettes audio, une rangée de présentation de disques compacts, une nouvelle rangée de présentation de cassettes audio, une nouvelle rangée de présentation de disques compacts, une rangée de présentation de cassettes audio, une rangée de présentation de cassettes vidéo, deux rangées de présentation de disques compacts et une rangée de présentation de cassettes audio.

On sait que, dans certains cas, le plateau d'exposition du présentoir n'est pas disposé horizontalement, mais présente une certaine inclinaison par rapport à l'horizontale, de l'ordre de 30°. Dans ce cas, comme on l'a représenté aux figures 7 et 8, la forme des plots est adaptée pour permettre toujours à l'article présenté de pouvoir être maintenu dans une position stable inclinée vers l'arrière permettant une bonne visibilité de sa face avant et dans une position stable inclinée vers l'avant dégageant l'accès visuel à l'article disposé juste derrière. Ainsi, on a représenté en 18 le plateau de présentation qui est incliné de 30° vers le bas par rapport à l'horizontale, et en 19 le profilé fixé sur ce plateau et dans la partie en forme de glissière duquel sont disposées les plaquettes successives 20 portant chacune un plot 21. Chaque plot 21 présente la forme d'une parallélogramme avec sa face supérieure avant 22 faisant un angle de 40° avec la perpendiculaire à l'axe du profilé 19 et sa face supérieure arrière 23 faisant un angle de 20° avec cette perpendiculaire. Les faces inférieures arrière 24 et avant 25 du plot 21 sont respectivement parallèles aux faces 22 et 23. On comprend alors que, dans la position d'exposition de l'article B, celui-ci s'appuie par sa face arrière sur la face avant 22 du plot 21 se trouvant derrière lui et, présente alors une inclinaison vers l'arrière de 10° par rapport à la verticale alors que, dans sa position inclinée vers l'avant où il engage la face 23 du plot situé devant lui, il présente une inclinaison de 50° par rapport à la verticale.

On comprendra que la description ci-dessus a été donnée à simple titre d'exemple, sans caractère limitatif, et que des adjonctions ou des modifications constructives pourraient y être apportées sans sortir du cadre de l'invention déterminé par les revendications annexées. On comprendra ainsi qu'on a décrit le profilé 5 comme constituant une glissière double, mais que ce profilé pourrait ne présenter une forme de glissière que d'un seul côté, deux profilés de ce type devant alors être accolés dos à dos pour le maintien des bords adjacents de deux rangées consécutives d'articles.

On comprendra aussi que le dispositif selon l'invention a été décrit pour la présentation de cassettes audio, de cassettes vidéo et de disques compacts, mais qu'il pourrait bien sûr être utilisé pour la présentation de tous articles similaires.

## Revendications

1. Dispositif de présentation pour des articles tels que des cassettes audio, des cassettes vidéo, des disques compacts ou similaires, caractérisé en ce qu'il comprend un plateau de présentation (1, 18) muni d'organes (3) permettant son maintien dans une position horizontale ou faiblement inclinée, ledit plateau (1, 18) comportant sur deux côtés opposés parallèles une succession d'organes de fixation (2) disposés en regard, des profilés de support (5, 19) dont les extrémités (4) sont destinées à coopérer avec des organes de fixation (2) en regard des deux côtés du plateau (1, 18) afin d'assurer leur maintien, les dits profilés de support (5, 19) étant ainsi fixés sur le plateau de présentation parallèlement les uns aux autres et à des écartements variables à volonté, des plaquettes porte-plot (8, 14, 20) étant montées en succession, sur au moins l'une des faces longitudinales du profilé (5, 19), en assurant un écartement constant des plots (9, 17, 21) qu'elles portent, chaque plot (9, 17, 21) présentant en section au moins quatre faces inclinées (10, 11, 12, 13 - 22, 23, 24, 25), parallèles deux à deux, deux faces disposées vers l'arrière (10, 11 - 23, 24) étant destinées à engager la face avant d'un article (A,B) en assurant respectivement le maintien de celui-ci dans une position de présentation inclinée vers l'arrière et dans une position d'effacement inclinée vers l'avant, alors que deux autres faces disposées vers l'avant (12, 13 - 22, 25) sont destinées à engager la face arrière de l'article disposé juste avant dans la rangée pour assurer respectivement le maintien de cet article dans les deux dites positions.

2. Dispositif de présentation selon la revendication 1, caractérisé en ce que lesdits moyens de fixation des profilés de support (5, 19) sont constitués par une succession de logements (2) identiques et de même écartement.

3. Dispositif de présentation selon la revendication 2, caractérisé en ce que le profilé de support (5, 19) présente à chaque extrémité une partie aplatie (4) destinée à s'engager dans un logement (2) du plateau (1, 18).

4. Dispositif selon l'une quelconque des revendications précédentes, caractérisé en ce que le profilé de support (5, 19) présente sur au moins l'une de ses deux faces longitudinales opposées une forme de glissière.

5. Dispositif selon la revendication 4, caractérisé en ce que les plaquettes porte-plot (8, 14, 20) s'engagent par coulissement dans la partie en forme de glissière du profilé de support (5, 19) et portent chacune sur sa face interne un plot (9, 17, 21) en saillie.

6. Dispositif selon la revendication 5, caractérisé en ce que la plaquette porte-plot (14) présente une partie en T avec deux ailes (15) s'engageant dans la glissière du profilé de support (5, 19) et une partie centrale en saillie vers l'intérieur se prolongeant vers le haut par une portion (16), destinée à porter le plot (9, 17, 21), qui est parallèle à l'aile supérieure (15) et s'étend à une hauteur plus grande que celle-ci.

7. Dispositif selon l'une quelconque des revendications précédentes, caractérisé en ce que chaque plot (9, 17, 21) présente en section la forme d'un parallélogramme.

8. Dispositif selon la revendication 7, caractérisé en ce que le plateau de présentation (1) est disposé horizontalement et en ce que les faces supérieures avant (13) et arrière (10) d'un plot (9) font chacune un angle d'environ 30° de part et d'autre de la verticale.

9. Dispositif selon la revendication 7, caractérisé en ce que le plateau de présentation (18) présente une orientation vers le bas d'environ 30° avec l'horizontale, et en ce que les faces supérieures avant (22) et arrière (23) du plot (21) font respectivement, avec la verticale au plan du plateau (18), des angles d'environ 40° vers l'arrière et 20° vers l'avant.

Fig.1

Fig. 2

Fig. 3

Fig. 6

*Fig.4*

*Fig.5*

Fig. 7

Fig. 8

**Office européen des brevets**

# RAPPORT DE RECHERCHE EUROPEENNE

Numéro de la demande

## EP 90 40 2332

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | FR-A-2 175 057 (PELLY)<br>* page 2, ligne 12 - page 4, ligne 1; figures 1, 8 *<br>– – – | 1,2,4,5 | A 47 F 7/28<br>A 47 F 5/00<br>G 11 B 23/023 |
| Y | EP-A-0 334 457 (MEUWESE, VAN DER SANDEN)<br>* page 2, ligne 43 - page 4, ligne 5; figures 1-4 *<br>– – – | 1,2,4,5 | |
| A | DE-U-8 900 102 (HERZIG)<br>– – – | | |
| A | WO-A-8 910 716 (GORRIE ADVERTISING MANAGE-MENT)<br>– – – – – | | |

| DOMAINES TECHNIQUES RECHERCHES (Int. Cl.5) |
|---|
| A 47 F<br>G 11 B<br>A 47 B<br>B 42 F |

Le présent rapport de recherche a été établi pour toutes les revendications

| Lieu de la recherche | Date d'achèvement de la recherche | Examinateur |
|---|---|---|
| La Haye | 18 décembre 90 | DE GROOT R.K. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

---------------------------------------------------------------

& : membre de la même famille, document correspondant